# EUROPEAN PATENT SPECIFICATION

(11) **EP 3 376 678 B1**
(45) Date of publication and mention of the grant of the patent: **04.12.2019**
(21) Application number: 17160525.6
(22) Date of filing: 13.03.2017
(51) Int. Cl.: H04B 5/00, H03H 15/02, H03K 3/64, H03K 5/13, H04L 9/06, H04L 9/32, H03K 5/14, H03K 5/15

(54) **RFID LOCATION CERTIFICATION**
RFID-ORTUNGSZERTIFIZIERUNG
CERTIFICATION D'EMPLACEMENT RFID

(43) Date of publication of application: 19.09.2018
(73) Proprietor: Nokia Technologies Oy, 02610 Espoo (FI)
(72) Inventor: STOCKER, Klaus, 70435 Stuttgart (DE)
(74) Representative: Nokia EPO representatives

(56) References cited:
- US-A1- 2004 232 220
- US-A1- 2007 046 467
- US-A1- 2012 249 296
- Roes Maes ET AL: "Toward Hardware-Intrinsic Security : Physically Unclonable Functrions: A study on the state of the Art and Future Research Directions" In: "Toward Hardware-Intrinsic Security : Physically Unclonable Functrions: A study on the state of the Art and Future Research Directions", 1 January 2012 (2012-01-01), XP055142523, pages 3-37, * the whole document *

## Description

### FIELD OF INVENTION

The present subject matter relates to the certification of the location of a product associated with a RFID tag.

### BACKGROUND

RFID (Radio Frequency Identification) systems are lacking security - today they are not secure against relay attacks. According to RFID methods, close proximity is needed for physical reasons to make the system work. However, a well-known security problem is appearing - the so-called relay station attack. In this case the close proximity of the authorized user is faked by a relay system that transports the signals needed for the authorization of an access control system from the authorized user. Document US 2012/249296 describes a RFID system using the limitation of light speed to certify a location.

There is a need for an implementation which allows secure location certification for RFIDs, with the creation of an extremely fast, simple, cheap, small and low energy consuming realization of a circuit.

### SUMMARY

This summary is provided to introduce concepts related to the present inventive subject matter. This summary is not intended to identify essential features of the claimed subject matter nor is it intended for use in determining or limiting the scope of the claimed subject matter.

In one implementation, a RFID tag for a product is described in claim 1.

Advantageously, the implementation provides a unique solution that allows an extremely fast, simple, cheap, small and low energy consuming realization of a circuit and that cannot be faked by relay attacks. The solution can be implemented into passive or active RFID chips. Moreover the exact range between the RFID reader and the RFID tag can be evaluated from signal travelling time between the RFID reader and the RFID tag.

In an embodiment, the synchronization impulse has stronger amplitude than signal of the sequence of bits.

In an aspect, the main line has a low impedance that is increased subsequently and transmission lines each have a substantially uniform high impedance.

In an embodiment, the number of bits in the sequence of bits is equal to the number of transmission lines in the transmission line array.

In an embodiment, the main line distributes the input signal toward the different transmission lines sequentially at a time interval corresponding to a bit length times the number of bits in the sequence of bits.

In an embodiment, the input signal coming from the input transmission line is also delayed by a time interval corresponding to a bit length, so that the bits of the input signal and the certificate signal are in synchronization when processed by the XOR device.

In an embodiment, said input transmission line, said main line and said different transmission lines act as signal delay elements.

In an embodiment, said input transmission line, said main line and said different transmission lines comprise RC, LC circuits or digital integrated elements.

In an embodiment, said input transmission line, said main line and said different transmission lines have a length that is dependent from the light speed in medium with relative permittivity and the bit length.

In another implementation a method to certify location of a RFID tag is described. The method comprises the following steps in a RFID reader:
sending an input signal comprising a synchronization impulse and an arbitrary sequence of bits to the RFID tag,
receiving an output signal corresponding to the input signal encrypted by the RFID tag,
evaluating delay time of the signal and analyzing whether encryption of the output signal is correct by decryption, using known certificate,
reporting positive location certification if encryption is correct or negative location certification if encryption is incorrect.

In another implementation a RFID reader to certify location of a RFID tag is described. The RFID reader comprises :
means (LOC) for sending an input signal comprising a synchronization impulse and an arbitrary sequence of bits to the RFID tag,
means (LOC) for receiving an output signal corresponding to the input signal encrypted by the RFID tag,
means (LOC) for evaluating delay time of the signal and analyzing whether encryption of the output signal is correct by decryption, using known certificate,
means (LOC) for reporting positive location certification if encryption is correct or negative location certification if encryption is incorrect.

In another implementation a computer-readable medium having embodied thereon a computer program for executing a method to certify location of a RFID tag. Said computer program comprises instructions which carry out steps according to the method according to the invention.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 illustrates a schematic block diagram of a communication system according to one embodiment of the invention for a certification of location of a RFID tag.
Figure 2 illustrates a schematic block diagram of an embodiment of an RFID tag showing structure including OR and XOR devices.
Figure 3 illustrates a schematic block diagram of an embodiment of an RFID tag showing equivalent circuit diagram of a transmission line array.
Figure 4 illustrates a flow chart illustrating a method for a certification of location of a RFID tag according to one embodiment of the invention.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention as defined by the appended claims. Furthermore, any examples described herein are intended to aid in understanding the principles of the invention, and are to be construed as being without limitation to such specifically recited examples and conditions. As a result, the invention is not limited to the specific embodiments or examples described below, but by the claims.

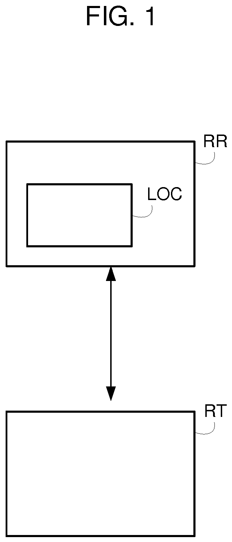

Referring to FIG. 1, a typical RFID system consists of two major blocks: a RFID reader RR and a RFID tag RT (as remote unit). The tag has a unique identification code incorporated into an ID circuit and this code becomes associated with the object to which the RFID tag is associated.

The RFID reader has a transmitter/receiver unit which transmits a signal to and receives a response from the RFID tag from respective antennas.

The RFID reader can be incorporated in a communication device that can be a mobile device. For instance, the communication device is a mobile telephone, a smartphone, or a tablet, an electronic telecommunication device or object that is personal to the user. Furthermore, the communication device can be a connected object that may be of different nature. For instance, the connected object may be device such as an advertisement board, a television set, a household appliance, a communication terminal, a fridge, a camera, a media drive, an information display etc. The connected object may be present in the user's home but also in public environments or other locations, for instance the user's workplace.

The RFID reader RR comprises a set of antenna associated with a communication module allowing transmission and reception of signals. The set of antenna is also associated with a location module LOC dedicated to certify location of the RFID tag.

The RFID reader RR is able to send an input signal comprising a synchronization impulse and an arbitrary sequence of bits, that is changed for each location certification request, toward a RFID tag and then to receive a signal encrypted by the RFID tag according to a certificate already known by the RFID reader for the purpose of decryption.

The location module LOC evaluates delay time of the signal, i.e. the time between the sending of the input signal and the reception of the encrypted signal, and analyses whether encryption of the signal is correct by decryption, using known certificate.

The location module LOC reports positive location certification if encryption is correct or negative location certification if encryption is incorrect.

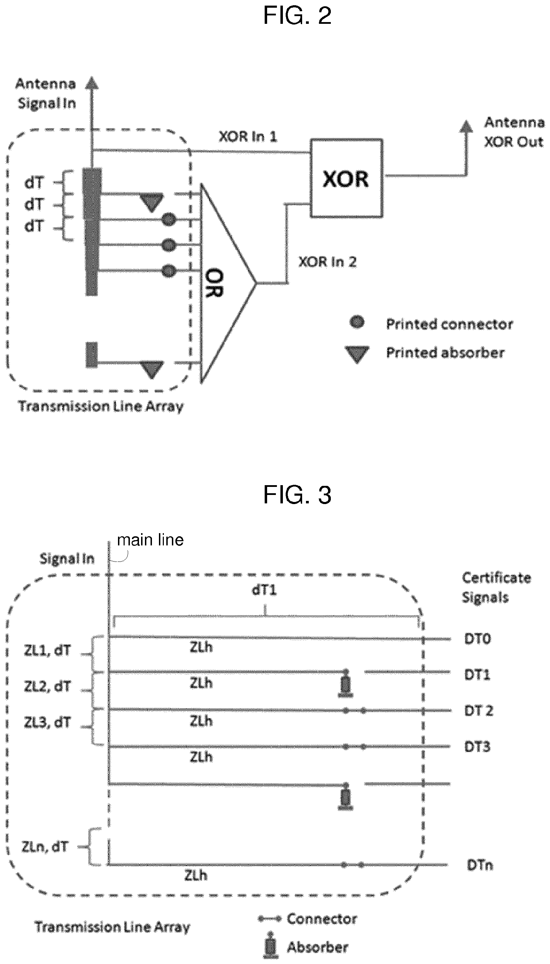

The RFID tag RT includes a tag substrate associated with OR and XOR devices as further described in FIG. 2.

Referring to FIG. 2, the RFID tag RT includes a receiver, a tag substrate comprising an input transmission line and a transmission line array, an OR device, a XOR device and a transmitter. The tag substrate can comprise semi-conductor substrate if digital elements are used.

The receiver comprises an antenna Antenna Signal In associated with treatment means that process signals received at the antenna in a suitable format to be transmitted to the transmission lines in the tag substrate, dispatching the input signal to an input transmission line and a transmission line array.

The transmitter comprises an antenna Antenna XOR Out associated with treatment means that process signals coming from the XOR device in a suitable format to be emitted by the antenna.

The transmission line array comprises a main line connecting different transmission lines sequentially, in order that the input signal is split from the main line into different transmission lines each comprising a connector or an absorber. The transmission line array together with absorbers and connectors is used as an encryption certificate, i.e. bits of the certificate are realized by absorbers and connectors within the transmission lines. The transmission line array can comprise different type of lines that act as signal delay elements. In principle also other signal delay elements like RC, LC circuits or digital integrated elements can be used in said transmission lines as delay elements. The bits of the encryption certificate could be realized by connectors and absorbers as well.

The main line distributes the input signal toward the different transmission lines sequentially at a time interval dT corresponding to a bit length (or transmission time of a bit).

The bit sequence response from the transmission line array is sequentially processed by an OR device to provide a certificate signal that feeds input XOR In 2 of the XOR device.

The XOR device receives in a input XOR In 1 the input signal coming from the input transmission line and in an input with the input XOR In 2 the certificate signal coming from the OR device, and delivers an output signal towards the antenna Antenna XOR Out, the output signal resulting from the combination of the input signal and the certificate signal with a "XOR" logical operation.

Referring to FIG. 3, the transmission line array of the RFID tag RT includes an main line and a transmission line array, the input transmission line being included or not in the transmission line array but anyway connected to the same main line that connects the different transmission lines of the transmission line array.

The synchronization impulse which has the stronger amplitude is travelling through the different transmission lines yields signals referenced as Certificate Signals DT1, DT2, ..., DTn. These certificates signals are added up by an OR device which leads to the certificate signal that represents the bits from the certificate in a time sequence.

The timing of the bit sequence used as input signal is aligned to the transmission line array structure: the length L of the transmission lines used for the delay elements are corresponding to the delay times needed.

The value dT1 represents the time delay between the synchronization impulses of the sequential bit sequences: dT1 = n ^{∗} dT, wherein n is the number of bits of the bit sequence.

The length L of a portion of the main line corresponding to the transmission of a bit is defined by to L = C /(dT ^{∗} √eps_r) and the length L1 of a transmission line corresponding to the transmission of to L1 = C /(dT1 ^{∗} √eps_r), wherein C is the light speed in medium with relative permittivity eps_r. In a general manner, the length of any type of line is dependent from the light speed in medium with relative permittivity and the bit length.

The bit length dT needs to be in the order of nano-second or pico-second range to keep the transmission line array small. By applying a high permittivity eps_r, the transmission line length can be further reduced.

The synchronization impulse is much stronger than the following bits of the bit sequence. Within the transmission line array the input signal is split from a main line with a low impedance (thick line) into the branches (transmission lines) where the certificate bits are created from. The branches have a substantially uniform high impedance (ZLh) along their length whereas the main line has a low impedance that is increased subsequently from ZL1 to ZLn so that the signal reflections from the junctions are minimized.

For the different certificate signals DT1, DT2,... , DTn, only the synchronization impulse is relevant. The bit sequence from the input signal with much lower amplitude is just creating a noise floor mixing up with the wanted signal. This noise floor is not relevant because its amplitude is low and it is considered a Zero by the OR device.

Referring to FIG. 2 and FIG. 3, the OR device adds up the certificate signals to one clean signal as the certificate signal representing the bits from the certificate as a sequence and feeding the input XOR In 2 of the XOR device. The input signal coming from the antenna and the input transmission line is feeding the input XOR In 2 of the XOR device and is also delayed by n ^{∗} dT = dT1 so that the bits of the two signals (input signal and certificate signal) are in synchronization and can be processed by the XOR device.

A truth table given in Table 1 shows the output signal delivered by the XOR device dependent from an arbitrary example of input signal and the example given in FIG. 3 showing the bits created by the absorbers and the connectors. The input signal comprises a synchronization impulse Sync followed by a sequence of bits 1, 0, 1, 1...

**Table 1**

| Time | input signal | input signal in XOR In 1 | certificate signal in XOR In 2 | output signal |
|---|---|---|---|---|
| T0 | Sync | 0 | 0 | 0 |
| T0 + dT | 1 | 0 | 0 | 0 |
| T0 + 2 ^{∗} dT | 0 | 0 | 0 | 0 |
| T0 + 3 ^{∗} dT | 1 | 0 | 0 | 0 |
| T0 + 4 ^{∗} dT | 1 | 0 | 0 | 0 |
| ... | | | | |
| T0 + dT1 + dT | 0 | Sync | 0 | 1 |
| T0 + dT1 + 2 ^{∗} dT | 0 | 1 | 1 | 0 |
| T0 + dT1 + 3 ^{∗} dT | 0 | 0 | 1 | 1 |
| T0 + dT1 + 4 ^{∗} dT | 0 | 1 | 0 | 1 |

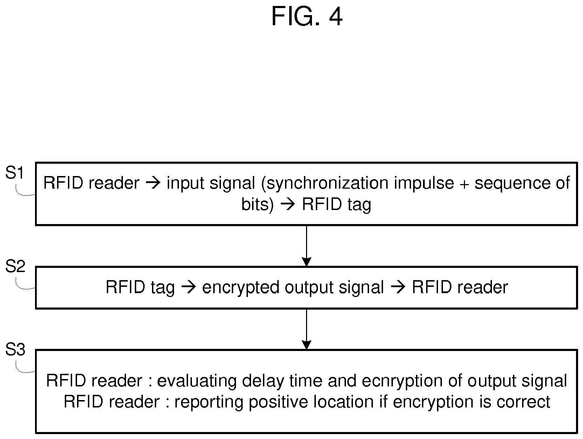

With reference to FIG. 4, a method for a certification of RFID location of a communication device according to one embodiment of the invention comprises steps S1 to S3 executed within the RFID system.

In step S1, the RFID reader RR sends to a RFID tag an input signal comprising a synchronization impulse and an arbitrary sequence of bits. The sequence of bits is changed for each location certification request.

In step S2, the RFID tag RT receives the input signal, processes the input signal and sends back an encrypted output signal. In more details, the receiver of the RFID tag RT dispatches the received input signal to the tag substrate comprising the input transmission line and the transmission line array allowing the input signal to be split from the main line into different transmission lines each comprising a connector or an absorber. Then the OR device adds up signals, being yielded from the synchronization impulse having travelled through the different transmission lines, to a certificate signal that represents the bits from a certificate in a time sequence. The certificate signal is processed by the XOR device in combination with the input signal coming from the input transmission line to yield an output signal which is transmitted by the transmitter back to the RFID reading device.

In principle the processing of the input signal could be also cascade on the RFID tag in order to increase security or implement different levels for security.

In step S3, the RFID reader receives output signal encrypted by the RFID tag. The location module LOC evaluates delay time of the signal and analyses whether encryption of the output signal is correct by decryption, using known certificate. The location module LOC reports positive location certification if encryption is correct or negative location certification if encryption is incorrect.

The synchronization impulse and the a sequence of bits could be realized by directly short pulses or by short by short bursts of the Radio Frequency signal. Both types of signal would travel over the air on short distances.

For the OR device and XOR device, power supply e.g. the conventional inductive power supply can be used that is used for passive RFIDs, thus no battery is necessary.

An embodiment comprises a RFID reader comprising one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

## Claims

1. An RFID tag for a product, the RFID tag comprising:
a receiver configured to receive an input signal from a RFID reading device, comprising a synchronization impulse and a sequence of bits, and
a transmitter configured to transmit an output signal to the RFID reading device,
**characterized in that**:
the receiver is configured to dispatch the input signal to a tag substrate comprising an input transmission line and a transmission line array allowing the input signal to be split from a main line into different transmission lines each comprising a connector or an absorber,
the RFID tag further **characterized in that** it comprises an OR device configured to add up signals to form a certificate signal that represents the bits from a certificate in a time sequence, the signals being yielded from the synchronization impulse having travelled through the different transmission lines; and
a XOR device processing the input signal from the input transmission line and the certificate signal from the transmission line array to yield the output signal,
wherein absorbers and connectors are logical functions that respectively lead to a logical "0" and a logical "1" from said certificate.

2. The RFID tag as claimed in claim 1, wherein the synchronization impulse has stronger amplitude than signal of the sequence of bits.

3. The RFID tag as claimed in any of the preceding claims, wherein the number of bits in the sequence of bits is equal to the number of transmission lines in the transmission line array.

4. The RFID tag as claimed in any of the preceding claims, wherein the main line distributes the input signal toward the different transmission lines sequentially at a time interval corresponding to a bit length times the number of bits in the sequence of bits.

5. The RFID tag as claimed in any of the preceding claims, wherein the input signal coming from the input transmission line is also delayed by a time interval corresponding to a bit length, so that the bits of the input signal and the certificate signal are in synchronization when processed by the XOR device.

6. The RFID tag as claimed in any of the preceding claims, wherein absorbers and connectors are logical functions that respectively leads to a logical "0" and a logical "1" from said certificate.

7. The RFID tag as claimed in any of the preceding claims, wherein said input transmission line, said main line and said different transmission lines act as signal delay elements.

8. The RFID tag as claimed in any of the preceding claims, wherein said input transmission line, said main line and said different transmission lines comprise RC, LC circuits or digital integrated elements.

9. The RFID tag as claimed in any of the preceding claims, wherein said input transmission line, said main line and said different transmission lines have a length that is dependent from the light speed in medium with relative permittivity and the bit length.

## Patentansprüche

1. RFID-Tag für ein Produkt, wobei das RFID-Tag umfasst:
einen Empfänger, der dazu eingerichtet ist, ein Eingangssignal von einer RFID-Lesevorrichtung zu empfangen, das einen Synchronisationsimpuls und eine Bitfolge umfasst, und
einen Sender, der dazu eingerichtet ist, ein Ausgangssignal an die RFID-Lesevorrichtung zu senden,
**dadurch gekennzeichnet, dass**:
der Empfänger dazu eingerichtet ist, das Eingangssignal an ein Tag-Substrat zu leiten, das eine Eingangsübertragungsleitung und eine Übertragungsleitungsanordnung umfasst, die es ermöglichen, das Eingangssignal aus einer Hauptleitung in verschiedene Übertragungsleitungen aufzuteilen, die jeweils einen Konnektor oder einen Absorber umfassen,
das RFID-Tag ferner **dadurch gekennzeichnet ist, dass** es eine ODER-Vorrichtung umfasst, die dazu eingerichtet ist, Signale zu aufzuaddieren, um ein Zertifikatssignal zu bilden, das die Bits aus einem Zertifikat in einer zeitlichen Abfolge darstellt, wobei die Signale aus dem Synchronisationsimpuls gewonnen werden, der durch die verschiedenen Übertragungsleitungen gelaufen ist; und
eine XOR-Vorrichtung, die das Eingangssignal aus der Eingangsübertragungsleitung und das Zertifikatssignal aus der Übertragungsleitungsanordnung verarbeitet, um das Ausgangssignal zu erzeugen,
wobei Absorber und Konnektor logische Funktionen sind, die jeweils zu einer logischen "0" und einer logischen "1" aus dem Zertifikat führen.

2. RFID-Tag nach Anspruch 1, wobei der Synchronisationsimpuls eine größere Amplitude als das Signal der Bitfolge aufweist.

3. RFID-Tag nach einem der vorhergehenden Ansprüche, wobei die Anzahl der Bits in der Bitfolge gleich der Anzahl der Übertragungsleitungen in der Übertragungsleitungsanordnung ist.

4. RFID-Tag nach einem der vorhergehenden Ansprüche, wobei die Hauptleitung das Eingangssignal sequentiell in einem Zeitintervall, das einer Bitlänge multipliziert mit der Anzahl der Bits in der Bitfolge entspricht, zu den verschiedenen Übertragungsleitungen verteilt.

5. RFID-Tag nach einem der vorhergehenden Ansprüche, wobei das von der Eingangsübertragungsleitung kommende Eingangssignal ebenfalls um ein einer Bitlänge entsprechendes Zeitintervall verzögert wird, sodass die Bits des Eingangssignals und des Zertifikatssignals bei der Verarbeitung durch die XOR-Vorrichtung synchron sind.

6. RFID-Tag nach einem der vorhergehenden Ansprüche, wobei Absorber und Konnektoren logische Funktionen sind, die jeweils zu einer logischen "0" und einer logischen "1" aus dem Zertifikat führen.

7. RFID-Tag nach einem der vorhergehenden Ansprüche, wobei die Eingangsübertragungsleitung, die Hauptleitung und die verschiedenen Übertragungsleitungen als Signalverzögerungselemente wirken.

8. RFID-Tag nach einem der vorhergehenden Ansprüche, wobei die Eingangsübertragungsleitung, die Hauptleitung und die verschiedenen Übertragungsleitungen RC-, LC-Schaltungen oder digitale integrierte Elemente umfassen.

9. RFID-Tag, nach einem der vorhergehenden Ansprüche, wobei die Eingangsübertragungsleitung, die Hauptleitung und die verschiedenen Übertragungsleitungen eine Länge aufweisen, die von der Lichtgeschwindigkeit im Medium mit relativer Dielektrizitätskonstante und der Bitlänge abhängig ist.

## Revendications

1. Étiquette RFID pour un produit, l'étiquette RFID comprenant :
un récepteur configuré pour recevoir un signal d'entrée de la part d'un dispositif de lecture RFID, comprenant une impulsion de synchronisation et une séquence de bits, et
un émetteur configuré pour émettre un signal de sortie au dispositif de lecture RFID,
**caractérisée en ce que**
le récepteur est configuré pour distribuer le signal d'entrée à un substrat d'étiquette comprenant une ligne de transmission d'entrée et un réseau de lignes de transmission permettant au signal d'entrée d'être divisé d'une ligne principale en différentes lignes de transmission comprenant chacune un connecteur ou un absorbeur,
l'étiquette RFID étant en outre **caractérisée en ce qu'**elle comprend
un dispositif OR configuré pour additionner des signaux en vue de former un signal de certificat qui représente les bits d'un certificat dans une séquence temporelle, les signaux étant produits à partir de l'impulsion de synchronisation qui a voyagé à travers les différentes lignes de transmission ; et
un dispositif XOR qui traite le signal d'entrée en provenance de la ligne de transmission d'entrée et le signal de certificat en provenance du réseau de lignes de transmission pour produire le signal de sortie,
les absorbeurs et les connecteurs étant des fonctions logiques qui donnent respectivement lieu à un « 0 » logique et un « 1 » logique de la part dudit certificat.

2. Étiquette RFID selon la revendication 1, l'impulsion de synchronisation ayant une amplitude plus forte que le signal de la séquence de bits.

3. Étiquette RFID selon l'une quelconque des revendications précédentes, le nombre de bits dans la séquence de bits étant égal au nombre de lignes de transmission dans le réseau de lignes de transmission.

4. Étiquette RFID selon l'une quelconque des revendications précédentes, la ligne principale distribuant le signal d'entrée vers les différentes lignes de transmission de manière séquentielle à un intervalle de temps qui correspond à une longueur de bit multiplié par le nombre de bits dans la séquence de bits.

5. Étiquette RFID selon l'une quelconque des revendications précédentes, le signal d'entrée provenant de la ligne de transmission d'entrée étant également retardé d'un intervalle de temps correspondant à une longueur de bit, de sorte que les bits du signal d'entrée et le signal de certificat sont en synchronisation lorsqu'ils sont traités par le dispositif XOR.

6. Étiquette RFID selon l'une quelconque des revendications précédentes, les absorbeurs et les connecteurs étant des fonctions logiques qui donnent respectivement lieu à un « 0 » logique et un « 1 » logique de la part dudit certificat.

7. Étiquette RFID selon l'une quelconque des revendications précédentes, ladite ligne de transmission d'entrée, ladite ligne principale et lesdites différentes lignes de transmission agissant comme des éléments de retard de signal.

8. Étiquette RFID selon l'une quelconque des revendications précédentes, ladite ligne de transmission d'entrée, ladite ligne principale et lesdites différentes lignes de transmission comprenant des circuits RC, LC ou des éléments intégrés numériques.

9. Étiquette RFID selon l'une quelconque des revendications précédentes, ladite ligne de transmission d'entrée, ladite ligne principale et lesdites différentes lignes de transmission ayant une longueur qui est dépendante de la vitesse de la lumière dans un fluide ayant une permittivité relative et de la longueur de bit.
